# EUROPÄISCHE PATENTSCHRIFT

(11) **EP 1 321 851 B1**
(45) Veröffentlichungstag und Bekanntmachung des Hinweises auf die Patenterteilung: **20.12.2006**
(21) Anmeldenummer: 02102605.9
(22) Anmeldetag: 19.11.2002
(51) Int. Cl.: H04M 3/493

(54) **Verfahren und System zum Nutzen von vom Nutzer frei zu wählenden Markierungsnamen als Einsprungposition in die Menustruktur eines Sprach-Dialogsystems**
Method and system for the usage of user selectable markers as entry points in the structure of a menu of a speech dialogue system
Méthode et système pour l'utilisation de marqueurs sélectionnables par un utilisateur comme points d'entrée dans la structure d'un menu d'un système de dialogue de parole

(30) Priorität: 20.11.2001 DE 10156945
(43) Veröffentlichungstag der Anmeldung: 25.06.2003
(73) Patentinhaber: Philips Intellectual Property & Standards GmbH, 20099 Hamburg (DE); Koninklijke Philips Electronics N.V., 5621 BA Eindhoven (NL)
(72) Erfinder: Breuer, Richard, Postfach 500442 52088 Aachen (DE); Halberschmidt, Martin, Postfach 500442 52088 Aachen (DE); Hodam, Henrik, Postfach 500442 52088 Aachen (DE); Prangenberg, Martin, Postfach 500442 52088 Aachen (DE); Schröer, Olaf, Postfach 500442 52088 Aachen (DE); Vranken, Peter, Postfach 500442 52088 Aachen (DE); Wöhrmann, Thomas, Postfach 500442 52088 Aachen (DE)
(74) Vertreter: Volmer, Georg

(56) Entgegenhaltungen:
- US-A- 4 932 021
- US-A1- 2001 014 146

## Beschreibung

Die Erfindung betrifft ein Verfahren zum Betrieb eines Sprach-Dialogsystems, welches mit einem Nutzer unter Verwendung einer Spracherkennungseinrichtung und/oder einer Sprachausgabeeinrichtung und einer Dialogkontrolleinheit kommuniziert, wobei die Dialogkontrolleinheit den Dialogablauf zischen dem Nutzer und dem Spcach-Dialogsystem anhand einer Dialogbeschreibung steuert. Darüber hinaus betrifft die Erfindung ein entsprechendes Sprach-Dialogsystem und ein Computerprogramm mit Programmcode-Mitteln, um das Verfahren auszuführen.

Sprach-Dialogsysteme, die mit einem Nutzer unter Verwendung von Spracherkennungs- und/oder Sprachausgabeeinrichtungen kommunizieren, sind bereits seit längerem bekannt Es handelt sich hierbei um sprachgesteuerte, automatische Systeme, die oft auch als Voice-Portale oder Sprachapplikationen bezeichnet werden. Ein Beispiel hierfür sind automatische Anrufbeantwortungs- und Auskunftssysteme, wie sie inzwischen beispielsweise von einigen größeren Firmen und Ämtern verwendet werden, um einen Anrufer möglichst schnell und komfortabel mit der gewünschten Information zu versorgen oder mit einer Stelle zu verbinden, welche für die speziellen Wünsche des Anrufers zuständig ist. Weitere Beispiele hierfür sind die automatische Telefonauskunft, wie sie bereits von einigen Telefongesellschaften eingesetzt wird, eine automatische Fahrplanauskunft oder ein Informationsdienst mit allgemeinen Veranstaltungshinweisen für eine bestimmte Region, beispielsweise Kino- und Theaterprogramme. Ebenso sind natürlich auch Kombinationen der verschiedensten Auskunftssysteme möglich, beispielsweise ein komplexeres Sprach-Dialogsystem, bei dem der Nutzer sich zunächst entscheiden muss, ob er beispielsweise Auskünfte über Abfahrtszeiten oder Veranstaltungshinweise oder den aktuellen Wetterbericht etc. haben möchte, worauf er dann an den gewünschten Dienst weitervermittelt wind. Im Prinzip können - ähnlich wie beispielsweise im Internet - dem Benutzer beliebige Informationen über ein solches Sprach-Dialogsystem angeboten werden. Bei einem Sprach-Dialogsystem besteht jedoch der Vorteil, dass der Benutzer lediglich einen normalen Telefonanschluss benötigt, um das System nutzen zu können und sämtliche Informationen abzufragen. Vorraussetzung hierfür ist nur, dass diese Informationen in akustischer Form ausgegeben werden können. Sofern das Sprach-Dialogsystem zusätzlich auch die Ausgabe von graphischen oder sonstigen Daten erlaubt, beispielsweise mittels eines Geräts mit graphischer Benutzeroberfläche und zusätzlicher Sprachsteuerung, können natürlich auch alle anderen Informationen ausgegeben werden.

Zur Steuerung des Dialogablaufs enthält das Sprach-Dialogsystem in der Regal eine Dialogkontrolleinheit (Dialog Control). Die Steuerung erfolgt dabei anhand einer Dialogbeschreibung, die in einer speziellen Dialogbeschreibungssprache im System hinterlegt ist. Es kann sich hierbei um eine beliebige Dialogbeschreibungssprache handeln. Übliche Sprachen sind beispielsweise verfahrensorientierte Programmiersprachen wie C oder C++, sogenannte Hybridsprachen, welche deklarativ und verfahrensorientiert sind wie beispielsweise Voice XML oder PSP HDLL, bei denen es sich um ähnlich aufgebaute Sprachen handelt wie die in der Regel zur Beschreibung von Internetseiten verwendete Sprache HTML. Darüber hinaus kann es sich auch um eine rein graphische Dialogbeschreibungssprache handeln, in der die einzelnen Positionen innerhalb des Dialogablaufs, beispielsweise eine Verzweigungsstelle oder der Aufruf einer bestimmten Datenbank, in Form eines graphischen Blocks (Box) und die Verbindung zwischen den Blocks durch Linien dargestellt sind.

Es liegt auf der Hand, dass mit zunehmender Komplexität eines Sprach-Dialogsystem dem Nutzer zwar einerseits mehr Informationen zur Verfügung gestellt werden können und das System somit einen höheren Nutzen und breitere Anwendungsmöglichkeiten bietet. Andererseits wird aber mit zunehmender Komplexität des Sprach-Dialogsystems die Steuerung des Systems bzw. die "Navigation" durch das System, um eine gewünschte Information zu finden, für den Nutzer immer aufwendiger, schwieriger und zeitraubender. Hierbei ist zu berücksichtigen, dass dem Vorteil der einfachen Nutzung des Systems mittels eines simplen Telefons der Nachteil gegenübersteht, dass dem Nutzer die zur Verfügung stehenden Informationen nicht nebeneinander visuell angeboten werden können, sondern in der Regel in jeder Position entlang des Dialogablaufs vom Dialogsystem verschiedene Alternativen aufgezählt werden müssen, für die sich der Nutzer dann entscheidet. Wenn der Nutzer hierbei einmal irrtümlich eine falsche Antwort bezüglich seines Auskunftsbegehrens gegeben hat oder nach Erhalt der Information zu dem Schluss kommt, dass er zusätzliche Informationen aus anderen Bereichen benötigt, muss er häufig mit dem Dialog ganz von vorne beginnen, was bei den heutigen Auskunftssystemen oft so realisiert wird, dass der Nutzer die Verbindung unterbricht und erneut das Sprach-Dialogsystem kontaktiert.

Die Druckschrift US 2001/0014146 A1 offenbart ein interaktives Sprachausgabesystem zur automatischen, auf Benutzungshäufigkeit basierenden Aktualisierung der Reihenfolge von Menüoptionen, so dass die populärsten Auswahlen zuerst kommen. Das interaktive Sprachausgabesystem kann so konfiguriert werden, dass das Menü für jeden individuellen Nutzer angepasst wird. Das interaktive Sprachausgabesystem kann eine Benutzeridentifikation, wie zum Beispiel eine benutzerpersönliche Identifikationsnummer (PIN) oder eine Benutzeranrufer-Identifikationsnummer sowie die Auswahlen, die der Nutzer bei vorherigem Zugriff auf das System getätigt hat, aufzeichnen.

Der Benutzer vermag einen bestimmten eingeschlagenen Weg zu speichern, so dass zukünftig der Nutzer nicht durch die gesamte Menüführung hindurch navigieren muss, um an eine verlangte Funktion zu gelangen. Der Benutzer hat zum Beispiel auf das System zugegriffen und wurde zum Beispiel durch ein Passwort oder eine Zugangsnummer identifiziert und hat zu einer Funktion der dritten hierarchischen Stufe navigiert. Entweder vor oder nach Ausführen der Funktion mag dem Nutzer die Möglichkeit gegeben werden, den eingeschlagenen Funktionspfad zu speichern, das heißt die ausgewählte Endfunktion. Wenn der Benutzer von dieser Option Gebrauch macht, zum Beispiel durch Anwählen der Raute- oder der Sterntaste, erhält der Benutzer die Möglichkeit, direkt mit dieser Funktion fortzufahren, wenn er sich das nächste Mal einwählt.

Beim Einwählen vermag das System dem Benutzer die Option zur Verfügung zu stellen, die Koordinaten der zuletzt ausgewählten Funktion einzugeben. Zum Beispiel, wenn die zuletzt ausgewählte Funktion mit einer Eingabeaufforderung 210a verknüpft war, erhält der Benutzer die Option zum Eingeben der Ziffern (3, 1) (entweder durch Eintippen oder durch Sprechen), welche die erste Funktion der dritten hierarchischen Stufe repräsentieren.

Der Benutzer des interaktiven Sprachausgabesystems kann während dem Navigieren durch die Menüführung eine bestimmte Funktion als Startpunkt für eine nachfolgende Anfrage definieren. Dies erfordert zumindest ein erstmaliges Benutzen und Navigieren durch die Menüführung des interaktiven Sprachausgabesystems, um den entsprechenden Startpunkt zu definieren. Alternativ kann der Benutzer einzelne Funktionen einer hierarchischen Stufe überspringen oder zu anderen hierarchischen Stufen des Menüs wechseln. Er kann auch zu einer beliebigen Funktion des Menüs springen, indem er eine bestimmte Ziffernfolge eingibt, die eine definierte Position im Dialogablauf bezeichnet. Die Ziffernfolge bezieht sich hierbei auf eine Funktionsnummer und eine hierarchische Stufe im Dialogablauf, wie zum Beispiel (3, 1).

Möchte der Benutzer zu einer bestimmten Funktion im Dialogablauf direkt springen, so muss er zumindest eine genaue Kenntnis über den Dialogablauf haben, das heißt der Benutzer muss selbst wissen welche Funktion sich hinter einer eingegebenen Ziffernfolge befindet. Die in US 2001/0014146 A1 beschriebene einzugebende Ziffernfolge zum direkten Springen zu einer Dialogfunktion entspricht vielmehr der Adresse jener Funktion innerhalb des Dialogablaufs. Diese Adresse ist sehr abstrakt und gibt keinerlei Hinweis auf die Funktionalität einer Funktion, die sich hinter dieser Adresse verbirgt. Ein Kontext bezogenes Navigieren durch den Dialogablauf ist dem Benutzer daher nur möglich, wenn er die Struktur des Dialogablaufs im Detail kennt. Aufgrund der Vielzahl von unterschiedlichen Sprach-Dialogsystemen, die mitunter sehr komplexe Dialogabläufe aufweisen, ist es dem Benutzer nicht zuzumuten, sich detaillierte Kenntnis über den jeweiligen Dialogablauf vor Benutzung des Sprach-Dialogsystems zu beschaffen.

Der Erfindung liegt dem gegenüber die Aufgabe zu Grunde, dem Nutzer ein möglichst komfortables Navigieren innerhalb eines Sprach-Dialogsystems zu ermöglichen, ohne dass der Nutzer das Sprach-Dialogsystem bereits benutzt haben muss oder über detaillierte Kenntnis über den Dialogablauf verfügt.

Diese Aufgabe wird durch ein Verfahren gemäß Patentanspruch 1 und durch ein Sprach-Dialogsystem gemäß Patentanspruch 12 gelöst. Die abhängigen Ansprüche enthalten jeweils besonders vorteilhafte Ausgestaltungen und Weiterbildungen der Erfindung.

Erfindungsgemäß werden bestimmte während eines Dialogs zwischen dem Nutzer und dem Sprach-Dialogsystem erreichbare Positionen im Dialogablauf als Einsprungspositionen im Sprach-Dialogsystem markiert. Hierzu wird jeweils eine zu der entsprechenden Position gehörige Adresse innerhalb der Dialogbeschreibung gemeinsam mit einem der Position zugeordneten Markierungsnamen gespeichert. Bei einer späteren Eingabe des gespeicherten Markierungsnamens durch den Nutzer kann dann das Sprach-Dialogsystem automatisch auf die zugeordnete Adresse innerhalb der Dialogbeschreibung springen und den Dialog ab der entsprechenden Position weiterführen. Hierbei ist der Markierungsname durch den Benutzer frei wählbar. Der Benutzer kann zum Abspeichern der erreichbaren Position des Dialogablaufs einen für ihn eingängigen Begriff als Markierungsnamen frei bestimmen. Der Nutzer ist daher nicht länger gezwungen, eine schwer eingängige Adresse der Dialogbeschreibung zum direkten Anwählen einer bestimmten Funktion einzugeben. Der Nutzer benötigt daher keinerlei Kenntnis über den Dialogablauf und die hierarchische Struktur der Dialogbeschreibung.

Welche Art von Adresse gespeichert wird, hängt im Wesentlichen von der verwendeten spezifischen Dialogbeschreibungssprache ab. In einer verfahrensorientierten oder Hybrid-Beschreibungssprache ist der Programmcode üblicherweise in Programmcodezeilen aufgebaut. Diese Zeilen sind in der Regel mit Zeilennummern versehen, so dass als Adresse die jeweilige Zeilennummer benutzt werden kann. Bei Verwendung einer graphischen Dialogbeschreibungssprache besitzen die jeweiligen Blocks, die eine bestimmte Position repräsentieren, eine eigene Identifizierungsnummer o. dgl., oft auch ID genannt. Bei derartigen Dialogbeschreibungssprachen wird Sinnvollerweise als Adresse diese Block-Identifizierungsnummer o. Ä. verwendet.

Durch die Markierung bestimmter Positionen ist es für den Benutzer, sofern er den Markierungsnamen der jeweiligen Position kennt, nicht mehr notwendig, das gesamte System von vorne bis zu dieser Position zu durchlaufen, sondern er kann jederzeit innerhalb eines Dialogs zu dieser Position springen. Insbesondere ist es für den Benutzer so auch möglich, eine einmal erreichte Position zu markieren und später wieder an diese Position zurückzuspringen, sofern er weitere Informationen haben möchte und dazu zu Positionen gelangen muss, die er von der aktuellen Position aus nicht erreicht.

Ein erfindungsgemäßes Sprach-Dialogsystem benötigt neben der üblichen Spracherkennungseinrichtung und der Sprachausgabeeinrichtung sowie der Dialogkontrolleinheit mit einer geeigneten Dialogbeschreibung lediglich Mittel, um bestimmte während eines Dialogs zwischen dem Nutzer und dem Sprach-Diatogsystems erreichbare Positionen im Dialogablauf als Einsprungpositionen zu markieren, wobei diese Mittel einen Speicher aufweisen müssen, um eine zu der Position gehörige Adresse innerhalb der Dialogbeschreibung sowie einen der Position zugeordneten Markierungsnamen zu speichern.

Zum Aufruf einer solchen Markierung, d. h. um an die entsprechende markierte Position zu gelangen, benötigt das Spcach-Dialogsystem Mittel, um bei Eingabe eines gespeicherten Markierungsnamens durch den Nutzer automatisch auf die zugehörige Adresse innerhalb der Dialogbeschreibung zu springen und den Dialog ab der entsprechenden Position weiterzuführen. Dies ist durch eine einfache Routine realisiebar, die die dem Markierungsnamen zugeordnete Adresse aus dem Speicher ermittelt und an die zuständige Routine der Kontrolleinheit übergibt. Vorzugsweise werden die gespeicherten Markierungsnamen explizit einer Wortbibliothek der Spracherkennungseinrichtung hinzugefügt oder auf andere Weise der Spracherkennungseinrichtung zugänglich gemacht, um eine möglichst sichere Erkennung des Markierungsnamens zu gewährleisten.

Die Markierung von Positionen kann auf verschiedenste Weise durchgeführt werden.

Eine Variante besteht darin, dass der Nutzer selbstständig explizit als Teil innerhalb des Dialogs eine von ihm erreichte Position als Einsprungposition markiert. Dies ist möglich, indem er beispielsweise durch einen entsprechenden Befehl wie "Markierung setzen" in ein geeignetes Untermenü des Dialogsystems springt, in welchem die Adresse gespeichert und der Markierungsname zugeordnet wird.

Der Benutzer kann dabei den Markierungsnamen beispielsweise frei wählen. Bei einer bevorzugten Ausführungsvariante werden aber vom Sprach-Dialogsystem mehrere mögliche Markierungsnamen vorgeschlagen, wobei der Nutzer einen dieser Markierungsnamen auswählen kann. Es ist klar, dass Sinnvollerweise das Sprach-Dialogsystem Markierungsnamen vorschlägt, die mit der jeweiligen Position im Zusammenhang stehen und die sich der Nutzer leicht merken kann. Beispielsweise könnte bei einem Dialogsystem zur Abfrage von Veranstaltungshinweisen an einer Position, in welcher das Dialogsystem eine Theaterdatenbank der Stadt Bedin aufruft, der Markierungsnamen "Berliner Theater" vorgeschlagen werden.

Alternative kann das Sprach-Dialogsystem natürlich auch selber einen Markierungsnamen vorgeben. Ebenso ist es möglich, eine Kombination der verschiedenen Möglichkeiten zur Namensgebung vorzusehen. So kann beispielsweise zunächst das Sprach-Dialogsystem verschiedene Markierungsnamen vorschlagen, und wenn der Benutzer innerhalb eines bestimmten Zeitraums keine Markierung auswählt, gibt das Sprach-Dialogsystem selber den Markierungsnamen vor. Der Nutzer wird dann z. B. nur noch über die Auswahl des Markierungsnamens informiert.

Eine solche frei wählbare Markierung von bestimmten Positionen als Einsprungpositionen innerhalb des Dialogablaufs bietet in ähnlicher Weise eine große Vereinfachung der Steuenmg des Sprach-Dialogsystems durch den Nutzer, wie das Setzen von sog. Lesezeichen im Internet, da der Benutzer auf diese Weise ohne Zeitablauf jederzeit für ihn wichtige Positionen innerhalb des Dialogablaufs erreichen kann.

Eine weitere Möglichkeit zur Markierung bestimmter Positionen als Einsprungpositionen besteht darin, dass das Sprach-Dialogsystem dem Nutzer automatisch bei Erreichen einer bestimmten Position innerhalb eines Dialogs von sich aus anbietet, die jeweilige Position als Einsprungposition zu markieren und beispielsweise in das Untermenü zur Markerung der Position springt, sofern der Benutzer dieses Angebot akzeptiert.

Ebenso ist es möglich, dass das Sprach-Dialogsystem von sich aus sofort, d h. ohne Rückfrage beim Nutzer, bestimmte Positionen als Einsprungpositionen markiert. Diese Positionen können beispielsweise automatisch bei Erreichen innerhalb des Dialogs zwischen Nutzer und Dialogsystem markiert werden.

Vorzugsweise werden außerdem im Vorhinein bestimmte wichtige Positionen innerhalb der Dialogbeschreibung vorab markiert und mit im Voraus bestimmten Markierungsnamen verknüpft. Typische Markierungen, welche vom System - beispielsweise von dem Ersteller der Dialogbeschreibung - selbst vordefiniert und mit festen Namen versehen sind, können z B. die Startposition zu einer Hilfefunktion mit dem Markierungsnamen "Hilfe", eine Position zum Beginn einer Bezahlungroutine mit dem Markierungsnamen "Zahlung" oder eine Position mit dem Markierungsnamen "Demo" sein, bei der es sich um die Ausgangsposition zu einem Demonstrationsablauf des Sprach-Dialogsystems handelt.

Vorzugsweise werden in einer bestimmten Sitzung die zu den während des Dialogs markierten Einsprungpositionen gehörigen Adressen und Markierungsnamen als nutzerspezifische Daten in einem Speicher, beispielsweise in einer Nutzerprofil-Datenbank, hinterlegt. Die Daten können dann bei einer nachfolgenden Sitzung aus dem Speicher vom System wieder aufgerufen werden, so dass die nutzerspezifischen Daten auch in dieser Sitzung zur Steuerung des Dialogsystems durch den Nutzer zur Verfügung stehen. Der Nutzer kann so beispielsweise wie gewohnt durch Eingabe einer in einer vorherigen Sitzung gespeicherten Sprachmarkierung das Sprach-Dialogsystem veranlassen, automatisch auf die zugeordnete Adresse innerhalb der Dialogbeschreibung zu springen und den Dialog ab dieser Position weiterzuführen. Der Speicher für diese nutzerspezifischen Daten befindet sich vorzugsweise auf einem Rechner auf Seiten des Sprach-Dialogsystems bzw. des Anbieters des Sprach-Dialogsystems. Eine weitere Alternative besteht darin, dass die Daten lokal in dem Gerät gespeichert werden, welches der Nutzer zum Anruf benutzt.

Die allgemein vom System - unabhängig vom Dialog des jeweiligen Benutzers mit dem Dialogsystem - markierten, erreichbaren Positionen im Dialogablauf sowie deren zugehörige Daten können anstatt in einer für den Nutzer erstellten Nutzerprofil-Datenbank bzw. einem entsprechenden nutzerspezifischen Speicher auch in einem allgemeinen Speicher bzw. einer allgemeiner Datenbank hinterlegt werden, die allen Nutzern des Sprach-Dialogsystems zur Verfügung stehen.

Bei einem besonders bevorzugten Ausführungsbeispiel werden bei der Markierung einer Einsprungposition gemeinsam mit der zu der Position gehörigen Adresse innerhalb der Dialogbeschreibung sowie dem Markierungsnamen bestimmte Umgebungsparameter gespeichert, die die Dialogkontrolleinheit für einen weiteren Dialog an dieser Position benötigt. Beispiele für solche Umgebungsparameter sind ein Name oder eine Adresse einer aufzurufenden Datenbank sowie die der Datenbank an dieser Stelle zu übergebenden Parameter, wie bei einem Fahrplan der Abfahrtsort, der Zielort und/oder eine gewünschte Abfahrtszeit. Auf diese Weise ist es für den Nutzer nicht nur möglich, eine bestimmte Position zu erreichen, sondern das System wird automatisch in dieser Position auch so passend konfiguriert, dass der Nutzer möglichst schnell die gewünschte Auskunft erhält, ohne weitere Parameter eingeben zu müssen.

Vorzugsweise werden die Umgebungsparameter ebenfalls als nutzerspezifische Daten beispielsweise in der Nutzerprofil-Datenbank hinterlegt, um für zukünftige Sitzungen des Nutzers mit dem Sprach-Dialogsystem zur Verfügung zu stehen. So kann beispielsweise ein Nutzer, der häufiger das gleiche Dialogsystem anruft, um sich über bestimmte Abfahrtszeiten vom Bahnhof Aachen zu informieren, nach Erreichen der Position innerhalb des Dialogablaufs, in dem das System die Fahrplandatenbank aufruft, und nachdem bereits als ein Parameter der Abfahrtsort eingegeben wurde, eine Markierung setzen, wobei mit dieser Markierung gleich der Abfahrtsort mit hinterlegt wird. Bei einem späteren Aufruf dieser Position unter dem gegebenen Markierungsnamen gelangt der Nutzer sofort an diese Position im Dialogablauf, und der aufzurufenden Datenbank wird automatisch der Abfahrtsort mit übergeben, so dass der Benutzer dann lediglich den Zielort und die Abfahrtszeit eingeben muss.

Bei allgemein für alle Nutzer vom System vormarkierten Positionen können die nutzerunabhängigen Umgebungsparameter auch in einem allgemeinen Speicher hinterlegt werden.

Bei einer weiteren bevorzugten Ausführungsform werden bei der Markierung einer Einsprungposition gemeinsam mit den übrigen Daten ein oder vorzugsweise mehrere Schlüsselworte gespeichert, wobei der Begriffsinhalt der Schlüsselworte in einem Zusammenhang zu der markierten Einsprungposition innerhalb des Dialogablaufs steht. Dies kann entweder vom Sprach-Dialogsystem automatisch durchgeführt werden, oder es werden vom Nutzer selber gewünschte Schlüsselworte eingegeben. So könnten beispielsweise einer Position, welche einen Aufruf einer Fahrplandatenbank vorsieht, die Schlüsselwörter "DB", "Zug", "Fahrplan", "Deutsche Bahn", "Bahn" etc. zugeordnet werden.

Diese Schlüsselworte können als mögliche Suchbegriffe beispielsweise in einer Suchfunktion dienen. In einer solchen Suchfunktion, welche z B. durch Aufruf eines Untermenüs mittels eines entsprechenden Befehls wie "Suchen" aktiviert werden kann, kann der Benutzer ein Schlüsselwort eingeben. Das Sprach-Dialogsystem wird dann nach Eingabe eines solchen Schlüsselwortes automatisch die Schlüssel worte der einzelnen markierten Positionen durchsuchen und, sofern es nur eine Position mit diesem Schlüsselwort gibt, automatisch an der zugehörigen Einsprungposition den Dialog weiterführen, d h auf die zugeordnete Adresse innerhalb der Dialogbeschreibung springen. Sofern es mehrere Einsprungpositionen mit diesem Schlüsselwort gibt, kann das System an den Nutzer die Markierungsnamen der verschiedenen Einsprungpositionen ausgeben, so dass dieser durch Eingabe eines Markierungsnamens dann an die gewünschte Position gelangen kann.

Eine solche Suchfunktion kann auch ohne expliziten Aufruf durch den Nutzer aktiviert werden, beispielsweise immer dann, wenn der Nutzer einen Begriff als gewünschten Markierungsnamen eingibt, aber kein Markierungsname in dieser Form hinterlegt ist. Die Erfassung eines unbekannten, vom Nutzer eingegebenen Begriffs durch das Sprach-Dialogsystem führt in diesem Fall automatisch dazu, dass anhand der Schlüsselworte nach zugehörigen markierten Positionen gesucht wird.

Auch die Schlüsselworte werden Sinnvollerweise beispielsweise in der Nutzerprofil-Datenbank hinterlegt, um für spätere Sitzungen zur Verfügung zu stehen. Bei den vom System vormarkierten Positionen können wiederum allgemein für alle Nutzer definierte Schlüsselworte auch in einem allgemeinen Speicher hinterlegt werden.

Diese Suchfunktion hilft zum einen, wenn der Benutzer selber seine von ihm gesetzten Markierungen vergessen hat. Insbesondere ist sie aber sinnvoll, um die vom System vordefinierten, markierten Positionen zu finden, bei denen es sich in der Regel um Positionen handelt, an denen ein bestimmter Service des Dialogsystems, beispielsweise eine Hilferoutine oder die Abfrage einer bestimmten Datenbank, beginnt. Da die zugehörigen Markierungsnamen dieser "vormarkierten" Positionen dem Nutzer normalerweise zunächst nicht bekannt sind, ist es sinnvoll, wenn gerade diese markierten Positionen mit besonders vielen sinnvollen Schlüsselworten verknüpft sind, so dass der Benutzer über die Schlüsselworte die jeweiligen Positionen schnell finden kann.

Bei einer Suche können auch Ähnlichkeiten zwischen den Schlüsselworten und den vom Benutzer eingegebenen Suchbegriffen oder Sätzen bzw. Wortsequenzen berücksichtigt werden. Zum Teil kann hierzu das ohnehin vom Spracherkennungslexikon verwendete Synonymlexikon genutzt werden.

Um die Position zu finden, welche am besten zu dem eingegebenen Namen passt, kann auch ein beliebiges Ähnlichkeitsmaß definiert werden und mit Hilfe dieses Ähnlichkeitsmaßes die Position mit der größten Übereinstimmung zum eingegebenen Begriff oder Satz herausgesucht werden. Ein mögliches Ähnlichkeitsmaß ist beispielsweise der Vergleich der eingegebenen Wortsequenz mit den Schlüsselworten, wobei festgestellt wird, wie viele der Worte innerhalb der Wortsequenz mit den Schlüsselworten übereinstimmen. Hierbei können nicht sinntragende Worte unberücksichtigt bleiben.

Bei einem weiteren bevorzugten Ausführungsbeispiel werden bei der Markierung einer Einsprungposition oder bei Erreichen einer bereits markierten Position während eines Dialogs zwischen dem Nutzer und dem Dialogsystem vom Sprach-Dialogsystem Protokolldaten gespeichert. Diese Protokolldaten enthalten Informationen über die Reihenfolge, in der die betreffende Einsprungposition während des Dialogs in Bezug zu anderen Einsprungpositionen erreicht wurde.

Auch diese Protokolldaten werden vorzugsweise in einem dem Nutzer zugeordneten Speicher, beispielsweise innerhalb der Nutzerprofil-Datenbank, für nachfolgende Sitzungen gespeichert.

Bei den Protokolldaten kann es sich entweder um eine Information handeln, die gemeinsam mit der zu der Position gehörigen Adresse und dem Markierungsnamen gespeichert wird, beispielsweise eine fortlaufende Nummer. Es ist aber auch möglich, die Positionen bzw. die zugehörigen Adressen und/oder die zugehörigen Markierungsnamen in einer separaten, chronologischen Protokollliste abzuspeichern.

Eine Speicherung der Protokolldaten ist insbesondere dann sinnvoll, wenn regelmäßig Positionen markiert wenden. Dies kann durch das Sprach-Dialogsystem erfolgen, indem dieses entweder in regelmäßigen zeitlichen Abständen oder beim Erreichen bestimmter wesentlicher Positionen automatisch eine Markierung durchführt. Typische wesentliche Positionen, an denen Markierungen unter Aufnahme von Protokolldaten erfolgen könnten, sind beispielsweise eine Position vor Anfrage einer bestimmten Datenbank, wobei Sinnvollerweise die Datenbankanfrage mit allen Umgebungsparametern gespeichert wird, eine Position vor einer Anrufweiterleitung, wobei dann die angefragte Nummer gespeichert werden könnte, eine Position bei einem Wechsel zu einem anderen Service oder ein Aufruf zu einer Hilfefunktion oder einer Demofunktion.

Eine solche Markierung die in erster Linie zur Protokollierung dient, kann auch verdeckt durchgeführt werden, wobei das Dialogsystem automatisch ohne Rückfrage an den jeweiligen Nutzer die Adresse gemeinsam mit einem automatisch festgelegten Markierungsnamen und den Protokolldaten speichert. Bei Erreichen einer Position, welche bereits als Einsprungposition markiert ist, reicht es aus, wenn das System nur die neuen zusätzlichen Protokolldaten speichert. Diese Protokolldaten können zusätzlich zu älteren Protokolldaten gespeichert werden, oder es werden die alten Protokolldaten überschrieben.

Die Speicherung der Protokolldaten erlaubt in einem bevorzugten Ausführungsbeispiel, dass der Nutzer unter Nutzung der Protokolldaten das Sprach-Diatogsystem so steuert, dass er eine während des bisherigen Dialogs in einer aktuellen Sitzung oder in einer vorhergehenden Sitzung erreichte, markierte Einsprungposition schnell wieder erreicht.

Bei einem Ausführungsbeispiel kann der Nutzer explizit eine spezielle Protokollfunktion bzw. "History-Funktion" mit einem entsprechenden Befehl, beispielsweise "History", aufrufen. Zur Navigation mit Hilfe der Protokolldaten kann dann z. B. das Sprach-Dialogsystem innerhalb eines Untermenüs dem Nutzer die Markierungsnamen zumindest eines Teils der Einsprungpositionen in chronologischer Reihenfolge ausgeben, und der Nutzer kann dann einen der Markierungsnamen auswählen und so zu der gewünschten Adresse springen.

Ebenso kann der Nutzer mit Hilfe dieser Protokolldaten auch im laufenden Dialog Navigationsbefehle wie beispielsweise "zurück", "letzte Position" oder "nächste Position" eingeben. Mit solchen Funktionen, die sehr einfach auf gespeicherten Protokolldaten basierend eingerichtet werden können, ist es dem Benutzer jederzeit möglich, zu einer Position zurückzuspringen, wenn er merkt, dass er bei der letzten Eingabe einen Fehler gemacht hat.

Die notwendigen Mittel zur Durchführung des Verfahrens können im Prinzip rein softwaremäßig auf einem geeigneten Computer realisiert werden, welcher mit den entsprechenden Softwaremodulen wie einer automatischen Spracherkennung, einer Sprachausgabeeinrichtung, beispielsweise einem TTS-System (Text tö Speech), einem Systemsteuerungsmodul, einem Dialogkontrollmodul und entsprechenden Datenbanken ausgestattet ist. Dieser Computer muss entweder einen geeigneten Anschluss an ein Kommunikationsnetz, beispielsweise eine Telefonschnittstelle, aufweisen oder, falls es sich um ein Vor-Ort-System handelt, beispielsweise um ein Sprach-Informationsterminal, ein Mikrofon und einen Lautsprecher. Erfindungsgemäß muss lediglich zusätzlich ein Speicher eingerichtet werden und das Systemsteuerungsmodul bzw. das Dialogkontrollmodul entsprechend so umprogrammiert werden, dass die benötigten Daten, wie die Adressen der Positionen innerhalb der Dialogbeschreibung und die gewünschten Markierungsnamen, gespeichert werden können.

Die verschiedenen Module können dabei im Übrigen auch anstelle auf einem einzelnen Rechner auf verschiedenen, untereinander vernetzten Rechner installiert sein. So kann beispielsweise ein erster Rechner, welcher über die Telefonschnittstelle erreichbar ist, das Systemsteuerungsmodul, das Dialogkontrollmodul und eine Sprachausgabeeinrichtung aufweisen, wogegen die relativ rechenintensive automatische Spracherkennung bei Bedarf auf einem zweiten Rechner durchgeführt wird.

Vorzugsweise weist das Dialogsystem außerdem eine entsprechende Routine auf, um die Markierungen zu bearbeiten und beispielsweise Markierungen durch den Benutzer wieder entfernen zu lassen, indem die zugehörigen Daten gelöscht werden. Ebenso können die Markierungen geändert werden, indem beispielsweise ein anderer Markierungsname gewählt wird. Ebenso ist es möglich, die Markierungsnamen beispielsweise innerhalb einer eigenen Liste zu sortieren und ggf. auch unter Oberbegriffen zu sortieren und zu gruppieren oder sich alle bisher existierenden Markierungen bzw. die zugehörigen Markierungsnamen ausgeben zu lassen, um anhand dieser Markierungsnamen eine Markierung auszuwählen.

Der Nutzer kann insbesondere auch zu bereits vom System festgelegten oder von ihm selbst markierten Position zusätzlich Schlüsselworte als Suchbegriffe hinzufügen oder die Schlüsselworte ändern.

Die Erfindung wind im Folgenden unter Hinweis auf die beigefügten Figuren anhand eines Ausführungsbeispiels näher erläutert. Es zeigen:
Figur 1 eine schematische Blockdarstellung eines erfindungsgemäßen Sprach-Dialogsystems,
Figur 2 eine schematische Darstellung eines Ausschnitts einer in einer graphischen Beschreibungssprache abgefassten Dialogbeschreibung.

Figur 3 ein Flussdiagramm eines Ablaufs einer Nutzung des Sprach-Dialogsystems durch einen Nutzer unter Verwendung der Daten aus einer Nutzerprofil-Datenbank.

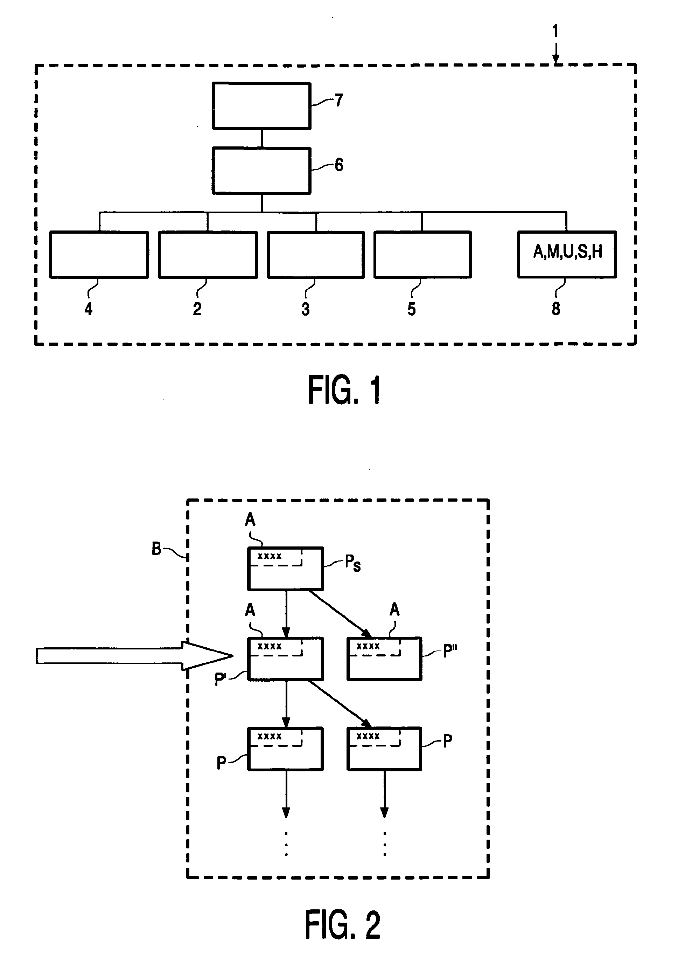

Bei dem in Figur 1 dargestellten Ausführungsbeispiel handelt es sich um ein typisches Sprach-Dialogsystem 1. Dieses Sprach-Dialogsystem 1 weist zur Kommunikation mit dem Nutzer eine Kommunikationsschnittstelle, hier eine Telefonanschlusseinheit 7, auf. Über diese Telefonanschlusseinheit 7 kann das Sprach-Dialogsystem 1 von einem Nutzer mittels eines beliebigen Telefons angerufen werden. Eine Systemsteuerungseinheit 6, in der Regel ein Softwaremodul, steuert die Interaktion von allen weiteren Einheiten 2, 3, 4, 5, 8 des Sprache-Dialogsystems 1 und bildet die Schnittstelle dieser Einheiten 2, 3, 4, 5, 8 zur Telefonanschlusseinheit 7.

Zu den üblichen weiteren Einheiten zählt zum einen ein herkömmliches Sprachetkennungsmodul 2 sowie eine Sprachausgabeeinrichtung 3. Hierbei kann es sich beispielsweise um ein TTS (Text to Speech)-System, welches Textdaten in Sprache umsetzt, oder um eine geeignete Dateiverwaltung mit verschiedenen Sounddateien mit vorgefertigten Sprachausgabesequenzen handeln. Es kann sich hierbei aber auch um ein gemischtes System mit einem TTS-Modul und Sounddateien handeln.

Weiterhin umfasst das Sprach-Dialogsystem 1 eine Dialogkontrolleinheit 4, welche anhand einer Dialogberltreibung B den Dialog mit dem Nutzer steuert. Auch hierbei handelt es sich in der Regel um ein Softwaremodul.

Optional, aber in den meisten Sprach-Dialogsystemen vorhanden, befindet sich im System 1 noch eine spezifische Anwendungsdatenbank 5, beispielsweise eine Datenbank mit einem Zugfahrplan und/oder mit Veranstaltungshinweisen etc.

Das erfindungsgemäße Sprach-Dialogsystem 1 weist außerdem zusätzlich einen weiteren Speicher 8 mit einer Nutzerprofil-Datenbank auf. In dieser Datenbank sind verschiedenste Nutzerprofile der dem System 1 bekannten Nutzer gespeichert.

Insbesondere wird in dieser Datenbank die Adresse A einer bestimmten Position P' innerhalb der Dialogbeschreibung B sowie ein zugehöriger gewählter Markierungsname M gespeichert, wenn eine bestimmte Position P' innerhalb des Dialogablaufs markiert werden soll.

Figur 2 zeigt hierzu eine typische Dialogbeschreibung B, wobei hier eine graphische Dialogbeschreibungssprache verwendet wird, in der die einzelnen Positionen P, P_{S}, P', P" durch Blöcke dargestellt werden, welche jeweils durch eine sog. ID als Adresse Aidentifizierbar sind. In der Figur ist der Start des Dialog beim Aufruf des Sprach-Dialogsystems 1 dargestellt. In der Realität ist die Dialogbeschreibung B um ein Vielfaches länger bzw. setzt sich nahezu beliebig fort.

In dem dargestellten Ausführungsbeispiel befindet sich der Nutzer gerade an der Position P', welche durch den Pfeil gekennzeichnet ist. Der Nutzer ist in diese Position P' beispielsweise nach einer entsprechende Antwort auf eine Abfrage in der oberen Startposition P_{S}, in der er die Wahl hat, in die Position P" oder in die Position P' zu gelangen, übergeben werden. Sofern der Benutzer diese Position P' als Einsprungposition markieren möchte, gibt er einen entsprechenden Befehl, und es wird automatisch vom Sprach-Dialogsystem 1 die Adresse A der Position P' im Speicher 8 hinterlegt und zusätzlich zu dieser Adresse A ein Markierungsname M gewählt, der ebenfalls in dem Speicher 8 hinterlegt wird. Dieser Markierungsname M kann entweder vom Nutzer frei gewählt werden oder es werden vom System verschiedene Markierungsnamen vorgeschlagen.

In bestimmten zeitlichen Abständen oder bei Erreichen bestimmter wichtiger Positionen setzt das Sprach-Dialogsystem zusätzlich automatisch Markierungen durch Speichern der zugehörigen Adresse A und durch Auswahl eines Markierungsnamens M. Diese Daten werden ebenfalls im Speicher 8 hinterlegt. Für einige spezielle Positionen sind außerdem entsprechende Markierungen bereits vom System im vorhinein festgelegt worden.

Gemeinsam mit der Adresse A und dem gewählten oder vorgegebenen Markierungsnamen M werden für einige Positionen zusätzlich U, beispielsweise bestimmte Parameter zur Übergabe in eine Datenbank oder der Datenbankname selbst, der an dieser Position benötigt wird, gespeichert. Außerdem werden zusätzlich bestimmte Schlüsselworte S als Suchbegriffe hinterlegt, wobei diese Schlüsselworte S mit der jeweiligen Position P bzw. zur Funktion, welche an dieser Position P zur Verfügung steht, im Zusammenhang stehen.

Der Nutzer kann dann jederzeit zu einem späteren Zeitpunkt einfach durch Eingabe des Markierungsnamens M zu einer gewünschten markierten Position P' gelangen. Hierzu sucht das Sprach-Dialogsystem, sobald der Markierungsname M vom Nutzer genannt und vom Spracherkennungsmodul 2 erkannt wurde, anhand des erkannten Markierungsnamens M die zugehörige Adresse A aus dem Speicher 8 bzw. der Nutzerprofil-Datenbank heraus und springt auf diese Adresse A der Dialogbeschreibung B. Außerdem werden gleichzeitig die Umgebungsparameter U übergeben, so dass der Nutzer in der Position P fortfahren kann, ohne die Umgebungsparameter U neu zu wählen.

Sofern der Nutzer den Markierungsnamen M vergessen hat oder beispielsweise bei einer automatisch oder bereits im Vorhinein vom System markierten Position P dem Nutzer der Markierungsname M gar nicht bekannt ist, ist es möglich, dass er verschiedene Suchbegriffe bzw. einen von ihm vermuteten Namen oder auch eine ganze Wortsequenz für die Markienmg eingibt und dieser Begriff oder die Wortsequenz mit den Schlüsselworten S verglichen wird und auf diese Weise die zugehörige Position P bzw. die zugehörige Adresse A innerhalb der Dialogbeschreibung B gefunden wind.

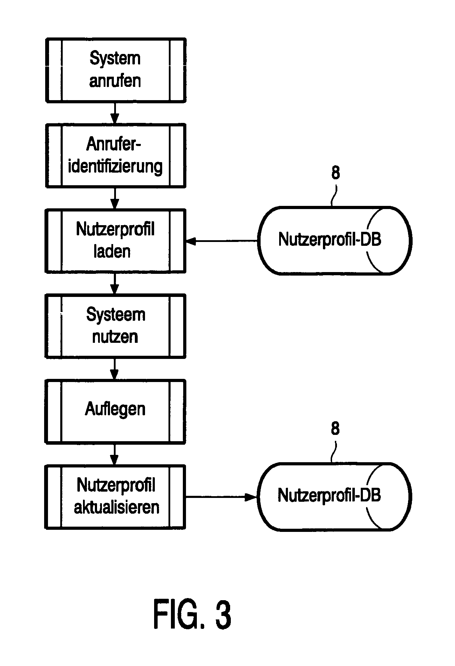

Figur 3 zeigt den Ablauf der Nutzung des Spach-Dialogsystems unter Verwendung der im Speicher 8 hinterlegten Nutzerprofil-Datenbank.

In einem ersten Schritt ruft der Nutzer das System an. Es erfolgt dann in einem weiteren Schritt die Anruferidentifizierung. Dies kann auf verchiedene Weise erfolgen. Eine Möglichkeit ist die sog. "Calling Line Identifizierung", bei der anhand der übertragenen Anrufertelefonnummer die Identifizierung erfolgt. Eine weitere Möglichkeit besteht darin, dass der Nutzer sich explizit einloggen muss, z. B. durch Eingabe eines Nutzernamens und eines Nutzerpasswortes oder einer PIN. Eine weitere Variante besteht darin, dass eine Sprecherverifizierung erfolgt, indem der Computer eine Sprachanalyse hinsichtlich bestimmter Sprechermerkmale durchführt und anhand dieser Analyse und anhand bereits hinterlegter Merkmale der Sprache eines bestimmten Nutzers diesen identifiziert.

Sobald der Nutzer identifiziert ist, wird aus der Nutzerprofil-Datenbank 8 das Nutzerprofil geladen. Diese Nutzerprofil-Datenbank ist hier, wie in Figur 1 dargestellt, innerhalb des Spcach-Dialogsystems 1 selbst angeordnet.

Mit dem Nutzerprofil erhält das Sprach-Dialogsystem 1 alle Informationen über die letzte Nutzung bzw. die letzten Nutzungen des Spcach-Dialogsystems 1 durch den betreffenden Nutzer. Hierzu zählen beispielsweise die Daten zu den vom Benutzer selbst markierten Positionen, die Protokolldaten H, welche die Informationen enthalten, in welcher Reihenfolge der Nutzer die markierten Positionen P innerhalb des Dialogablaufs - und zwar sowohl die selbst markierten Positionen P als auch die vom System markierten Positionen P-pasiert hat, sowie die zu den Positionen gehörigen Schlüsselworte. Das heißt, das Sprach-Dialogsystem 1 erhält mit dem Nutzerprofil sämtliche nutzerspezifischen Daten, die zur weiteren Steuerung des Sprach-Dialogsystems verwendet werden können.

Zum Laden des Nutzerprofils muss das Sprach-Dialogsystem 1 intern folgende Schritte vornehmen. Es muss zunächst für den jeweils anrufenden Nutzer eine Anfrage an die Nutzerprofil-Datenbank durchführen. Anschließend müssen die Daten von der Nutzerprofil-Datenbank an das Sprach-Dialogsystem 1, beispielsweise das Systemsteuerungsmodul 6 oder das Dialogkontrollmodul 4, übergeben werden. Insbesondere werden die zu den einzelnen markierten Positionen P gehörigen Markierungsnamen M in ein Lexikon des Spracherkennungsmoduls 2 übergeben, so dass dieses die Markierungsnamen M erkennt, wenn der Nutzer die Markierungsnamen M nennt.

In einem weiteren Schritt kann dann der Nutzer das Sprach-Dialogsystem 1 nutzen und hierbei die verschiedenen Hilfen nutzen, die auf Basis der Markierungen der Positionen P' und auf Basis der nutzerspezifischen Daten zur Verfügung stehen. Insbesondere kann er Markierungsnamen M nennen, welche vom Spracherkennungsmodul 2 erkannt werden, woraufhin die Dialogkontrolleinheit 4 dafür sorgt, dass das Sprach-Dialogsystem 1 auf die zu der gewünschten Position gehörige Adresse A innerhalb der Dialogbeschreibung B springt. Gleichzeitig werden automatisch die zu dieser Position P' gehörigen Adresse A gespeicherten Umgebungsvariablen U genutzt, um das Sprach-Dialogsystem 1 an der Position P' passend einzustellen.

Der Benutzer kann während der Nutzung des Systems, d h während des Dialogs, jederzeit Markierungen wieder löschen oder neue Markierungen hinzufügen bzw. Markierungen verändern, beispielsweise durch Veränderung des zugehörigen Markierungsnamens M oder durch Hinzufügen oder Verändern von zugehörigen Schlüsselwörtern S oder Umgebungsparametern U. Außerdem werden entsprechend des weiteren Dialogs die Protokolldaten H verändert bzw. ergänzt. Es werden intern vom Sprach-Dialogsystem alle Veränderungen und der weitere Dialog protokolliert. Wenn der Nutzer das Spiach-Dialogsystem verlassen möchte, muss er lediglich auflegen und die Verbindung unterbrochen. Es wird anschließend vom Sprach-Dialogsystem 1, beispielsweise vom Systemsteuerungsmodul 6, das Nutzerprofil aktualisiert und in der Nutzerprofil-Datenbank 8 hinterlegt.

Sofern ein Nutzer das Sprach-Dialogsystem 1 das erste Mal kontaktiert, ist in der Nutzerprofil-Datenbank für diesen Nutzer kein Nutzerprofil vorhanden, d. h. es sind keinerlei Daten von markierten Positionen P' bzw. Protokolldaten H über bereits erreichte markierte Positionen verfügbar. In diesem Fall wird vom System während der Erstbenutzung ein Nutzerprofil erstellt und nach Beendigung des Nutzungsvorgangs in der Nutzerprofil-Datenbank hinterlegt.

Es ist klar, dass bei einem Ausführungsbeispiel, bei dem die Nutzerprofil-Datenbank in einem Gerät des Nutzers hinterlegt ist, die Aktualisierung des Nutzerprofils und die Speicherung des Nutzerprofils in der Nutzerprofil-Datenbank vor einem Unterbrechen der Verbindung zwischen dem Gerät des Nutzers und dem Sprach-Dialogsystem 1 erfolgen muss.

Die Nutzerprofil-Datenbank enthält vorzugsweise nur die rein nutzerspezifischen Daten. Alle allgemein für alle Nutzer verwendeten Daten, beispielsweise allgemein vom System festgelegte Markierungen und die hierzu allgemein definierten Schlüsselworte, sind in einem allgemeinen, für alle Nutzer verwendbaren Speicher des Sprach-Dialogsystems hinterlegt.

Im Folgenden werden noch weitere Beispiele für verschiedene Markierungen von Positionen gegeben:

Ein Beispiel für eine nutzerdefinierte Markierung ist die Markierung einer Position unter dem Markierungsnamen "Täglicher Telekom-Aktienkurs". Gibt der Nutzer diesen Markierungsnamen ein, startet das Sprach-Dialogsystem direkt mit dem Aktienkurs-Mormadonsdienst und benutzt "Deutsche Telekom" als Aktiennamen sowie die aktuelle Zeit als Umgebungsdaten, um eine entsprechende Anfrage nach Aktienkursen bei der Datenbank des Aktienkurs-Informationsservices an dem betreffenden Tag durchzuführen.

Ein Beispiel für eine bereits vom System markierte Position ist eine Position unter dem Markierungsnamen "Wetterbericht", welcher den Benutzer direkt zu einem Wetterberichtsdienst leitet, Weitere Beispiele für solche Markierungen sind Positionen unter dem Markierungsnamen "Hilfe" oder "Demo", unter denen ein Nutzer Informationen darüber erhält, wie das Sprach-Dialogsystem zu nutzen ist. Diese Informationen können im Übrigen kontextabhängig sein, d h sie können beispielsweise von der Position innerhalb des Dialogablaufs abhängen, an der sich der Nutzer befindet, während er den entsprechenden Markierungsnamen nennt Das heißt auch, die vom System selbst vordefinierten, markierten Positionen können Umgebungsvariablen nutzen.

Ein gutes Beispiel für die Verwendung einer Suchfunktion ist eine Situation, in der ein Nutzer, der das System nur selten nutzt, den richtigen Markierungsnamen "Tägliche Telekom-Aktienkurse" vergessen hat und stattdessen "Telekom-Aktien von heute" sagt. Das System kennt keinen entsprechenden Markierungsnamen, kann aber gemeinsam mit einer Suchfunktion anhand der gegebenen Schlüsselworte versuchen, die gewünschte Position bzw. den gewünschten Markierungsnamen zu finden. Es bietet dann beispielsweise alle ähnlichen Markierungsnamen an bzw. alle Markierungsnamen, deren Schlüsselworte ähnlich zu dem eingegebenen Namen sind.

## Patentansprüche

1. Verfahren zum Betrieb eines Sprach-Dialogsystems (1), welches mit einem Nutzer unter Verwendung einer Spracherkennungseinrichtung (2) und einer Sprachausgabeeinrichtung (3) und unter Verwendung einer Dialogkontrolleinheit (4) kommuniziert, welche einen Dialogablauf zwischen dem Nutzer und dem Sprach-Dialogsystem (1) anhand einer Dialogbeschreibung (B) steuert, so **dass** zumindest eine bestimmte während eines Dialogs zwischen dem Nutzer und dem Sprach-Dialogsystem (1) erreichbare Position (P') im Dialogablauf als Einsprungposition (P') im Sprach-Dialogsystem (1) markiert wird, **dadurch gekennzeichnet dass** eine zu der Position (P') gehörige Adresse (A) innerhalb der Dialogbeschreibung gemeinsam mit einem der Position (P') zugeordneten, vom Benutzer frei wählbaren Markierungsnamen (M) gespeichert wird,
so dass das Sprach-Dialogsystem (1) bei einer späteren Eingabe des gespeicherten Markierungsnamens (M) durch den Nutzer automatisch auf die zugeordnete Adresse (A) innerhalb der Dialogbeschreibung (B) springt und den Dialog ab der entsprechenden Position (P') weiterführt.

2. Verfahren nach Anspruch 1,
**dadurch gekennzeichnet,**
**dass** der Nutzer bei Erreichen einer bestimmten Position innerhalb eines Dialogs das Sprach-Dialogsystem veranlasst, diese Position als Einsprungposition zu markieren.

3. Verfahren nach Anspruch 1 oder 2,
**dadurch gekennzeichnet,**
**dass** das Sprach-Dialogsystem automatisch bei Erreichen einer bestimmten Position innerhalb eines Dialogs dem Nutzer anbietet, diese Position als Einsprungposition zu markieren.

4. Verfahren nach einem der Ansprüche 1 bis 3,
**dadurch gekennzeichnet,**
**dass** das Sprach-Dialogsystem automatisch bestimmte Positionen als Einsprungposition markiert.

5. Verfahren nach einem der Ansprüche 1 bis 4,
**dadurch gekennzeichnet,**
**dass** das Sprach-Dialogsystem bei einer Markierung einer Position als Einsprungposition dem Nutzer mehrere mögliche Markierungsnamen vorschlägt, aus denen der Benutzer einen zu dieser Position gehörigen Markierungsnamen auswählen kann, und/oder dass das Sprach-Dialogsystem einen Markierungsnamen vorgibt.

6. Verfahren nach einem der Ansprüche 1 bis 5,
**dadurch gekennzeichnet,**
**dass** bei der Markierung einer Einsprungposition (P') Umgebungsparameter (U) gespeichert werden, die die Dialogkontrolleinheit (4) für einen weiteren Dialog an dieser Position (P') benötigt.

7. Verfahren nach einem der Ansprüche 1 bis 6,
**dadurch gekennzeichnet,**
**dass** in einer bestimmten Sitzung die während des Dialogs zu den markierten Einsprungspositionen (P') gehörigen Adressen (A) innerhalb der Dialogbeschreibung (B) und die zugeordneten Markierungsnamen (M) sowie zugehörige Umgebungsparameter (U) als nutzerspezifische Daten (A, M, U) in einem Speicher (8) hinterlegbar sind, und in einer späteren Sitzung zumindest teilweise bei der Steuerung des Dialogablaufs wieder verwendbar sind.

8. Verfahren nach einem der Ansprüche 1 bis 7,
**dadurch gekennzeichnet,**
**dass** bei der Markierung einer Einsprungposition vom Sprach-Dialogsystem automatisch und/oder nach Vorgabe durch den Nutzer zumindest ein zugehöriges Schlüsselwort (S) gespeichert wird, wobei der Begriffsinhalt dieses Schlüsselworts (S) in einem Zusammenhang zu der markierten Einsprungposition (P') innerhalb des Dialogablaufs steht.

9. Verfahren nach Anspruch 8,
**dadurch gekennzeichnet,**
**dass** das Sprach-Dialogsystem nach Eingabe eines Schlüsselworts durch den Nutzer automatisch auf eine zu einer zugehörigen Einsprungposition zugeordneten Adresse innerhalb der Dialogbeschreibung springt oder an den Nutzer die Markierungsnamen verschiedener zu diesem Schlüsselwort gehöriger Einsprungpositionen ausgibt.

10. Verfahren nach einem der Ansprüche 1 bis 9,
**dadurch gekennzeichnet,**
**dass** bei der Markierung einer Einsprungsposition und/oder bei Erreichen einer markierten Einsprungposition innerhalb eines Dialogs vom Sprach-Dialogsystem Protokolldaten gespeichert werden, die Informationen über die Reihenfolge, in der die markierte Einsprungposition während des Dialogs in Bezug zu anderen markierten Einsprungpositionen erreicht wurde, umfassen.

11. Verfahren nach Anspruch 10,
**dadurch gekennzeichnet,**
**dass** der Nutzer das Sprach-Dialogsystem unter Nutzung der Protokolldaten so steuert, dass er eine während des bisherigen Dialogs in einer aktuellen Sitzung und/oder einer vorhergehenden Sitzung erreichte markierte Einsprungposition erneut erreicht.

12. Sprach-Dialogsystem (1) mit einer Spracherkennungseinrichtung (2) und einer Sprachausgabeeinrichtung (3) zur Kommunikation mit einem Nutzer und mit einer Dialogkontrolleinheit (4) zum Steuern eines Dialogablaufs zwischen dem Nutzer und dem
Sprach-Dialogsystem (1) anhand einer Dialogbeschreibung (B),
**gekennzeichnet durch**
- Mittel, um bestimmte während eines Dialogs zwischen dem Nutzer und dem Sprach-Dialogsystem (1) erreichbare Positionen (P') im Dialogablauf als Einsprungspositionen (P') im Sprach-Dialogsystem (1) zu markieren, mit einem Speicher (8), um eine zu der Position (P') gehörige Adresse (A) innerhalb der Dialogbeschreibung (B) sowie einen der Position (P') zugeordneten, vom Benutzer frei wählbaren Markierungsnamen (M) zu speichern,
- und Mittel, um bei Eingabe eines gespeicherten Markierungsnamens (M) **durch** den Nutzer automatisch auf die zugeordnete Adresse (A) innerhalb der Dialogbeschreibung (B) zu springen und den Dialog ab der entsprechenden Position (P') weiterzuführen.

13. Computerprogramm mit Programmcode-Mitteln, um alle Schritte eines Verfahrens nach einem der Ansprüche 1 bis 11 auszuführen, wenn das Programm auf einem Computer eines Sprach-Dialogsystems ausgeführt wird.

14. Computerprogramm mit Programmcode-Mitteln gemäß Anspruch 13, die auf einem computerlesbaren Datenträger abgespeichert sind.

## Claims

1. A method of operating a speech dialogue system (1) which communicates with a user while a speech recognition device (2) and/or a speech output device (3) and a dialogue control unit (4) are used, which dialogue control unit controls a dialogue run between the user and the speech dialogue system (1) on the basis of a dialogue description (B), so that at least a certain position (P') in the dialogue run, which position can be reached during a dialogue between the user and the speech dialogue system (1), is marked in the dialogue run as an entry position (P') in the speech dialogue system (1), **characterized in that** an address (A) belonging to the position (P') is stored in the dialogue description together with a marker (M) assigned to the position (P') and can be selected at will by the user, so that the speech dialogue system (1) automatically jumps to the assigned address (A) in the dialogue description (B) if the user enters the stored marker (M) at a later time and the dialogue is continued from the respective position (P') onwards.

2. A method as claimed in claim 1, **characterized in that** the user, when reaching a certain position in a dialogue, causes the speech dialogue system to mark this position as an entry position.

3. A method as claimed in claim 1 or 2, **characterized in that** the speech dialogue system automatically offers the user to mark this position as an entry position when a certain position in a dialogue has been reached.

4. A method as claimed in any one of the claims 1 to 3, **characterized in that** the speech dialogue system automatically marks certain positions as entry positions.

5. A method as claimed in any one of the claims 1 to 4, **characterized in that**, when a position is marked as an entry position, the speech dialogue system suggests various possible markers to the user from which the user can select a marker belonging to this position and/or **in that** the speech dialogue system predefines a marker.

6. A method as claimed in any one of the claims 1 to 5, **characterized in that** when an entry position (P') is marked, environment parameters (U) are stored which are needed by the dialogue control unit for a further dialogue at this position (P').

7. A method as claimed in any one of the claims 1 to 6, **characterized in that** in a certain session the addresses (A) in the dialogue description (B) and belonging to the marked entry positions (P') and the assigned markers (M) as well as any associated environment parameters (U) can be stored as user-specific data (A, M, U) in a memory (8) and in a later session can be re-used at least partially by the control of the dialogue run.

8. A method as claimed in any one of the claims 1 to 7, **characterized in that** during the marking of an entry position the speech dialogue system automatically and/or after the predefinition by the user at least an associated keyword (S) is stored while the concept of this keyword (S) has a connection with the marked entry position (P') in the dialogue run.

9. A method as claimed in claim 8, **characterized in that** the speech dialogue system, after the user has entered a keyword, automatically jumps to an address assigned to an associated entry position in the dialogue description or delivers to the users the markers of various entry positions belonging to this keyword.

10. A method as claimed in one of the claims 1 to 9, **characterized in that** when an entry position is marked and/or when a marked entry position is reached in a dialogue, the speech dialogue system stores protocol data which contain information about the order in which the marked entry position was reached relative to other marked entry positions during the dialogue.

11. A method as claimed in claim 10, **characterized in that** the user controls the speech dialogue system while using the protocol data, so that he again reaches a marked entry position reached during the previous dialogue in a current session and/or a previous session.

12. A speech dialogue system (1) comprising a speech recognition device (2) and a speech output device (3) for communication with a user and comprising a dialogue control unit (4) for controlling a dialogue run between the user and the speech dialogue system (1) based on a dialogue description (B), **characterized by**
- means for marking certain positions (P') that can be reached in a dialogue between the user and the speech dialogue system (1) in the dialogue run as entry positions P', the means comprising a memory (8) for storing an address (A) belonging to the position (P') in the dialogue description (B) as well as a marker (M) assigned to the position (P') and freely selectable by the user, and
- means for automatically jumping to the assigned address (A) in the dialogue description (B) when a stored marker (M) is entered by the user and for proceeding with the dialogue from the respective position (P') onwards.

13. A computer program with program code means to carry out all the steps of a method as claimed in any one of the claims 1 to 11, if the program is run on a computer of a speech dialogue system.

14. A computer program with program code means as claimed in claim 13, which are stored on a data carrier that can be read by a computer.

## Revendications

1. Procédé de fonctionnement d'un système de dialogue de parole (1) qui communique avec un utilisateur en utilisant un dispositif de reconnaissance de parole (2) et un dispositif de sortie de parole (3) et en utilisant une unité de contrôle de dialogue (4) qui commande le déroulement du dialogue entre l'utilisateur et le système de dialogue de parole (1) à l'aide d'une description du dialogue (B) de telle sorte qu'au moins une position (P') déterminée accessible pendant un dialogue entre l'utilisateur et le système de dialogue de parole (1) est marquée dans le déroulement du dialogue comme point d'entrée (P') dans le système de dialogue de parole (1), **caractérisé en ce**
**qu'**une adresse (A) appartenant à la position (P') est enregistrée dans la description du dialogue en même temps qu'un nom de marquage (M) sélectionnable librement par l'utilisateur et attribué à la position (P'),
de telle sorte que le système de dialogue de parole (1) saute automatiquement à l'adresse (A) attribuée dans la description du dialogue (B) en cas d'introduction ultérieure du nom de marquage enregistré (M) par l'utilisateur et poursuit le dialogue à partir de la position correspondante (P').

2. Procédé selon la revendication 1,
**caractérisé en ce**
**que** l'utilisateur, en atteignant une position déterminée dans un dialogue, le système de dialogue de parole amène à marquer cette position comme point d'entrée.

3. Procédé selon l'une des revendications 1 ou 2,
**caractérisé en ce**
**que** le système de dialogue de parole propose automatiquement à l'utilisateur, lorsqu'une position déterminée est atteinte dans un dialogue, de marquer cette position comme point d'entrée.

4. Procédé selon l'une des revendications 1 à 3,
**caractérisé en ce**
**que** le système de dialogue de parole marque automatiquement certaines positions comme point d'entrée.

5. Procédé selon l'une des revendications 1 à 4,
**caractérisé en ce**
**que** le système de dialogue de parole proposant en cas de marquage d'une position comme point d'entrée plusieurs noms de marquage possibles à l'utilisateur à partir desquels celui-ci peut sélectionner un nom de marquage appartenant à cette position et/ou que le système de dialogue de parole détermine préalablement un nom de marquage.

6. Procédé selon l'une des revendications 1 à 5,
**caractérisé en ce**
**que**, lors du marquage d'un point d'entrée (P'), les paramètres ambiants (U) sont enregistrés et nécessitent l'unité de contrôle du dialogue (4) pour poursuivre son dialogue dans cette position (P').

7. Procédé selon l'une des revendications 1 à 6,
**caractérisé en ce**
**que**, dans une position déterminée, les adresses (A) appartenant pendant le dialogue aux points d'entrée (P') marqués peuvent être enregistrées dans la description de dialogue (B) et les noms de marquage attribués (M) ainsi que les paramètres ambiants correspondants (U) comme données spécifiques à l'utilisateur (A, M, U) dans une mémoire (8) et, dans une position ultérieure, peuvent être réutilisés, du moins partiellement, pour la commande du déroulement du dialogue.

8. Procédé selon l'une des revendications 1 à 7,
**caractérisé en ce**
**que**, lors du marquage d'un point d'entrée par le système de dialogue de parole, au moins un mot-clé (S) correspondant est enregistré automatiquement et/ou après détermination préalable par l'utilisateur, le contenu de la notion de ce mot-clé (S) se trouvant en rapport avec le point d'entrée (P') marqué dans le déroulement du dialogue.

9. Procédé selon la revendication 8,
**caractérisé en ce**
**que** le système de dialogue de parole, après l'introduction d'un mot-clé par l'utilisateur, saute automatiquement à une adresse attribuée à un point d'entrée correspondant dans la description du dialogue ou délivre à l'utilisateur les noms de marquage de différentes positions appartenant à ce mot-clé.

10. Procédé selon l'une des revendications 1 à 9,
**caractérisé en ce**
**que**, lorsqu'un point d'entrée est marqué et/ou qu'un point d'entrée marqué est atteint dans un dialogue par le système de dialogue de parole, des données de protocole sont enregistrées et comprennent des informations sur l'ordre dans lequel le point d'entrée marqué pendant le dialogue a été atteint par rapport à d'autres points d'entrée marqués.

11. Procédé selon la revendication 10,
**caractérisé en ce**
**que** l'utilisateur commande le système de dialogue de parole en utilisant les données de protocole de telle sorte qu'il atteigne à nouveau un point d'entrée marqué atteint pendant le dialogue précédent dans une position actuelle et/ou une position précédente.

12. Système de dialogue de parole (1) avec un dispositif de reconnaissance de parole (2) et un dispositif de sortie de parole (3) pour la communication avec un utilisateur et avec une unité de contrôle de dialogue (4) pour la commande d'un déroulement du dialogue entre l'utilisateur et le système de dialogue de parole (1) à l'aide d'une description de dialogue (B),
**caractérisé par**
des moyens pour marquer certaines positions (P') accessibles pendant un dialogue entre l'utilisateur et le système de dialogue de parole (1) dans le déroulement du dialogue comme points d'entrée (P') dans le système de dialogue de parole (1) avec une mémoire (8) pour enregistrer une adresse (A) correspondant à la position (P') dans la description du dialogue (B) ainsi qu'un nom de marquage (M) sélectionnable librement par l'utilisateur et attribué à la position (P'),
et des moyens pour sauter automatiquement à l'adresse (A) attribuée dans la description du dialogue (B) en cas d'introduction d'un nom de marquage (M) enregistré par l'utilisateur et poursuivre le dialogue à partir de la position (P') correspondante.

13. Programme informatique avec des moyens de programmation pour réaliser toutes les étapes d'un procédé selon l'une des revendications 1 à 11 lorsque le programme est exécuté sur un ordinateur d'un système de dialogue de parole.

14. Programme informatique avec des moyens de programmation selon la revendication 13 qui sont enregistrés sur un support de données lisible par ordinateur.
